# EUROPÄISCHE PATENTSCHRIFT

(11) **EP 3 598 802 B1**
(45) Veröffentlichungstag und Bekanntmachung des Hinweises auf die Patenterteilung: **11.10.2023**
(21) Anmeldenummer: 18184359.0
(22) Anmeldetag: 19.07.2018
(51) Int. Cl.: H04W 40/22, H04L 45/42, H04W 84/18

(54) **VERFAHREN ZUM BETREIBEN EINES VERMASCHTEN FUNKNETZES MIT EINER REGELUNGSEINHEIT**
METHOD FOR OPERATING A WIRELESS MESH NETWORK WITH A CONTROLLING ENTITY
PROCÉDÉ DE FONCTIONNEMENT D'UN RÉSEAU DE RADIOCOMMUNICATION MAILLÉ AVEC UNE ENTITÉ DE CONTRÔLE

(43) Veröffentlichungstag der Anmeldung: 22.01.2020
(73) Patentinhaber: Deutsche Telekom AG, 53113 Bonn (DE)
(72) Erfinder: Lange, Christoph, 10318 Berlin (DE); Kosiankowski, Dirk, 15732 Eichwalde (DE)
(74) Vertreter: Braun-Dullaeus Pannen Emmerling Patent- & Rechtsanwaltspartnerschaft mbB

(56) Entgegenhaltungen:
- WO-A1-2016/168603
- US-A1- 2016 301 539

## Beschreibung

Die Erfindung betrifft ein Verfahren zum flexiblen Betreiben eines vermaschten Funknetzes sowie ein entsprechend geeignetes vermaschtes Funknetz auf dem Gebiet der Telekommunikationsnetze.

Der Bedarf an schnellen Internetverbindungen ist in letzter Zeit immer weiter gestiegen und wird aller Voraussicht nach auch in Zukunft weiter anwachsen. Die Installation moderner und leistungsfähiger Glasfaser-Zugangsnetze erfordert allerdings eine kostenintensive Verlegung der geeigneten Netzinfrastruktur, welche aufwändige Verlege- und Tiefbauarbeiten sowie die Installation der Glasfaserkabel umfasst. Hohe Kosten entstehen hierbei insbesondere bei den letzten Metern bis zu den Wohnungen der Kunden, da für jedes Haus individuell ein entsprechendes Glasfaserkabel verlegt werden muss. Es sind somit, insbesondere in ländlichen Regionen, pro Person sehr viele Anschlusspunkte zu erschließen und zu versorgen. Entsprechend aufwendig sind auch Reparaturen, falls an dem Glasfaserkabel Schäden entstanden sind. Zusätzlich erfordert die Schaffung dieser Infrastruktur einen großen Zeitaufwand, sodass nur langsam und sukzessive alle Gebäude mit einem entsprechenden Glasfaserkabelanschluss versorgt werden können.

Um diesen ganzen Aufwand zu vermeiden, werden derzeit vermehrt Funklösungen diskutiert, die die letzten Meter bis zu den Gebäuden, beispielsweise von einem Kabelverzweigerstandort ausgehend, hochbitratig überbrücken können. Bei solchen Funklösungen fällt der Installationsaufwand zeitlich und kostenmäßig deutlich geringer als bei der Festnetzlösung aus. Um allerdings eine vergleichbare Qualität der Übertragung im Vergleich zum herkömmlichen Glasfaseranschluss gewährleisten zu können, wird diskutiert die Anbindung der Zugangspunkte an das zentrale Kommunikationsnetz, insbesondere das Internet, über ein vermaschtes Funknetz zu realisieren.

Ein vermaschtes Funknetz umfasst generell mehrere Netzknoten, die mit einem oder mehreren der anderen Netzknoten verbunden sind. Daten, also in diesem Fall Funksignale, werden von Netzknoten zu Netzknoten weitergereicht, bis sie das Ziel erreichen. Ist die Anzahl der Netzknoten hoch genug, wird hierdurch ein flächendeckendes Funknetz mit einer großen Zuverlässigkeit und einer hohen Redundanz aufgespannt. Wenn ein Netzknoten oder eine Verbindung blockiert ist oder ausfällt, kann sich das vermaschte Netz um diesen defekten Netzknoten herum neu stricken. Die Funksignale werden umgeleitet und das Netzwerk ist nach wie vor betriebsfähig. Je höher die Anzahl der Funknetzknoten allerdings ist, desto größer ist der Energiebedarf derartiger vermaschter Funknetze im Vergleich zu Festnetzlösungen.

In der Literatur sind Systeme und Verfahren zu klassischen WLAN/WiFi Mesh-Networks bekannt, die auch erneuerbare Energiequellen in die Energieversorgung der Systeme einbeziehen; Terence D. Todd, AmirA. Sayegh, Mohammed N. Smadi, and Dongmei Zhao, "The Need for Access Point Power Saving in Solar Powered WLAN Mesh Networks", IEEE Network, May/June 2008, S. 4-10. Als Funkknoten des vermaschten Funknetzes fungieren hierbei sowohl sogenannte "Mesh-Points", die ausschließlich WLAN Relaying übernehmen und/oder sogenannte "Mesh-Access-Points", die zusätzlich zum Relaying WLAN-Abdeckung für die Endgeräte bereitstellen. Es werden hierbei unterschiedliche Mechanismen ("flooded" und "routed") verwendet. Zwischen den jeweiligen Funkknoten sind die Funkrouten ausgebildet, über die der Datenstrom verläuft. Weitere Einzelheiten in: IEEE Standards Association: IEEE Std 802.11s, "IEEE Standard for Information Technology - Telecommunications and information exchange between systems - Local and metropolitan area networks - Specific requirements - Part 11: Wireless LAN Medium Access Control (MAC) and Physical Layer (PHY) specifications - Amendment 10: Mesh Networking", 2011. Nachteilig ist allerdings bisher nicht bekannt, wie der Energiebedarf eines vermaschten Funknetzes effektiv reduziert werden kann.

In diesem Zusammenhang lehrt WO 2016/168603 A1 ein Mesh-Netzwerk umfassen Domänen mehrerer Knoten, die über Verbindungen miteinander verbunden sind und in denen sich Gateways befinden, die eine Domäne mit einem anderen Netzwerk verbinden. Die Domäne (n), ihre mehreren Knoten und ihre Links sind Teil einer Topologie. Auf eine Reihe von primären und Backup-Routing-Pfaden, die jeweils einen ST enthalten, der das ausgewählte Gateway und die Route zu diesem ausgewählten Gateway für Knoten in der Domäne enthält, wird für ein ausgewähltes Gateway bzw. mehrere ausgewählte Gateways zugegriffen oder bestimmt. Auf Zeitpläne, die von Knoten im Maschennetz über einen oder mehrere Planungszyklen verwendet werden sollen, wird zugegriffen oder bestimmt. Basierend auf dem Status der Verbindung (en) zwischen Knoten und dem Zeitplan (den Zeitplänen) wird die Umschaltung auf einen ausgewählten der primären oder Backup-Routing-Pfade für das ausgewählte Gateway durchgeführt. Das Routing im Mesh-Netzwerk wird basierend auf dem ausgewählten Routing-Pfad geändert. Informationen für die Pfade und Zeitpläne werden an Knoten gesendet.

In diesem Zusammenhang lehrt US 2016 0301539 A1 eine Möglichkeit, den Ausfall eines Knotens eines MESH- Netzwerks zu kompensieren, indem eine "Flooding- Technik" eingesetzt wird.

Es ist also die Aufgabe der Erfindung ein effizientes Verfahren zum Betreiben eines vermaschten Funknetzes sowie ein hierfür geeignetes vermaschtes Funknetz anzugeben.

Gelöst wird diese Aufgabe durch die unabhängigen Ansprüche 1 und 9.

Erfindungsgemäß ist ein Verfahren zum Betreiben eines vermaschten Funknetzes angegeben. Das vermaschte Funknetz umfasst Netzknoten, die das vermaschte Funknetz aufspannen, wobei die Netzknoten zumindest einen Festnetzanbindungsknoten und mehrere Funkknoten umfassen. Der zumindest eine Festnetzanbindungsknoten stellt eine Schnittstelle zu einem kabelgebundenen Datennetzwerk, insbesondere dem Internet, her und wandelt Funksignale und kabelgebundenen Daten ineinander um. Zudem empfängt und sendet der Festnetzanbindungsknoten Funksignale. Die Funkknoten empfangen und leiten Funksignale weiter. Zwischen jeweils zwei Netzknoten bildet das vermaschte Funknetz eine Anzahl n₀ an Funkrouten aus, wobei Daten zwischen dem Datennetzwerk und zumindest einem Zielknoten vermittels des vermaschten Funknetzes über eine Anzahl n₁ aktiver Funkrouten übertragen werden und einen Gesamtdatenstrom S₀ erzeugen,

Der Kern der Erfindung liegt nun darin, dass der zumindest eine Zielknoten einen Zielknotendatenstrom Z₀ anfordert und dass die Netzknoten mit einer Regelungseinheit datenleitend verbunden sind. Hierdurch kann die Regelungseinheit Informationen des vermaschten Funknetzes abfragen oder zugesendet bekommen. Zu diesem Zweck fragt die Regelungseinheit regelmäßig Eingangsdaten betreffend Betriebszustände der Netzknoten und des Zielknotendatenstroms Z₀ ab. Auf Basis dieser Eingangsdaten ändert die Regelungseinheit selektiv zumindest einen der Betriebszustände der Netzknoten und/oder der Funkrouten, um das vermaschte Funknetz dynamisch an den Bedarf des angeforderten Zielknotendatenstroms Z₀ anzupassen. Die Eingangsdaten der Betriebszustände der Netzknoten können beispielsweise umfassen, ob der Netzknoten aktiviert/deaktiviert ist, wie viele Datenpakete er an bestimmte andere Netzknoten sendet oder wie das Funksignal physikalisch "geformt" ist. Die Eingangsdaten der Betriebszustände des Zielknotendatenstroms Z₀ können insbesondere umfassen, ob der Zielknotendatenstrom Z₀ höher oder niedriger ist als der "aktuell" übertragene Gesamtdatenstrom S₀ und welcher Zielknoten wie viele Datenpakete anfordert.

Vorteilhaft wird hierdurch erreicht, dass das vermaschte Funknetz seinen Energieverbrauch intelligent und flexibel so an den tatsächlich bereitzustellenden Bedarf, also den Zielknotendatenstrom Z₀, anpasst, dass der Energieverbrauch deutlich geringer ausfällt als wenn das vermaschte Funknetz beständig mit seiner vollen Leistung betrieben werden würde. Die Regelungseinheit kann über einen extra hierfür eingerichteten Kanal des vermaschten Funknetzes mit allen Funkknoten kommunizieren und kennt daher den Zustand des gesamten vermaschten Funknetzes, der mittels eines implementierten Optimierungsalgorithmus, der auf einem Prozessor der Regelungseinheit implementiert ist, ausgewertet und analysiert werden kann. Die einzelnen Funkknoten weisen als Mindestfunktionalität zumindest die Eigenschaften eines Repeaters auf.

Vorzugsweise wird als Zielknoten ein Endgerät eines Nutzers, ein Mesh-Access Point, ein Mobilfunkmast und/oder ein weiterer Festnetzanbindungsknoten verwendet. Ist das Zielgerät das Endgerät des Nutzers, so kann durch das vermaschte Funknetz direkt in der Wohnung des Nutzers WLAN bereitgestellt werden, ohne dass der Nutzer hierzu einen WLAN-Router in seiner Wohnung anzubringen hat, wobei allerdings zweckmäßigerweise über diesen Kanal auch eine Identifizierung des Nutzers stattfinden müsste, um Gebühren entsprechend abrechnen zu können. Ist der Zielknoten der Mesh-Access-Point, so kann dieser das Funksignal abgreifen und dem Nutzer wieder als kabelgebundenes Signal zur Verfügung stellen. Der Mesh-Access-Point ist zudem in der Lage die Daten, die von den Nutzern kabelgebundenen gesendet werden, wieder in Funksignale umzuwandeln und über das vermaschten Funknetz an den Festnetzanbindungsknoten zurückzusenden. Der Mesh-Access-Point kann aber auch eine Schnittstelle für Funksignale ausbilden. Durch den weiteren Festnetzanbindungsknoten als Zielknoten können mittels des vermaschten Funknetzes zwei verschiedene kabelgebundene Datennetzwerke miteinander verbunden werden und gegenseitig Daten austauschen. Wird als Zielknoten ein Mobilfunkmast verwendet, kann hierdurch eine Kleinfunkzelle für Mobilfunknetze geschaffen werden.

In einer bevorzugten Ausführung der Erfindung ermittelt der Optimierungsalgorithmus der Regelungseinheit eine optimierte Funkroute oder mehrere optimierte Funkrouten für die Funksignale zwischen Festnetzanbindungsknoten und dem zumindest einen Zielknoten. Typischerweise überlappen sich die Funkbereiche der Funkknoten in einer Art, dass ein Funkknoten mehrere andere Funkknoten erreicht. Dies hat zur Folge, dass sich ein Signal von einem Anfangspunkt quasi lawinenartig zu einem Zielpunkt innerhalb des vermaschten Netzes ausbreitet. Unter einer lawinenartigen Ausbreitung ist hierbei zu verstehen, dass auch viele Funkrouten beschritten werden, die einen großen "Umweg" zu dem Zielpunkt zurücklegen. Der Optimierungsalgorithmus ermittelt nun eine optimierte Funkroute, die möglichst direkt zum Zielknoten führt, aber gleichzeitig die Zuverlässigkeit der Übertragung gewährleistet. Dies kann bedeuten, dass die optimierte Funkroute auch aus einer Mehrzahl von Funkrouten besteht, die allerdings kleiner ist als die lawinenartige Funkroutenschar.

Um die Funkrouten dynamisch an den Bedarf anzupassen, kann die Regelungseinheit aktive Funkrouten deaktivieren und deaktivierte Funkrouten aktivieren, um die optimale Route zu realisieren. Hierbei kann es insbesondere der Fall sein, dass der Gesamtdatenstrom S₀ zwar identisch oder zumindest annähernd identisch bleibt und das vermaschte Funknetz dennoch deutlich effektiver arbeiten. In diesem Fall würde S₀ als in etwa Z₀ entsprechen.

Bevorzugt werden die Funkrouten deaktiviert bzw. aktiviert, indem die Regelungseinheit den Betriebszustand der Netznoten ändert. Werden die Netzknoten beispielsweise teilweise in einen Ruhezustand versetzt, so wird der gesamte Energiebedarf des vermaschten Funknetzes reduziert. Hierbei berechnet die Regelungseinheit durch den Optimierungsalgorithmus, welche Funkknoten unter gleichzeitiger Einhaltung des angeforderten Zielknotendatenstroms Z₀ in den Ruhezustand versetzt werden können. Steigt der Zielknotendatenstroms Z₀ zu einem späteren Zeitpunkt wieder an, kann die Regelungseinheit geeignete Netzknoten wieder aktivieren. Diese dynamische Anpassung an den tatsächlichen Bedarf gewährleistet, dass der Energieverbrauch des vermaschten Funknetzes effizient ist und nicht unnötig hoch ausfällt. Die Anzahl n₁ der Funkrouten kann also dynamisch erhöht oder erniedrigt werden.

Zweckmäßigerweise sind die Funkknoten mit Sensoren und entsprechenden Algorithmen versehen, die Funksignale auswerten. Hierdurch wird den Funkknoten ermöglicht, dass diese zumindest teilweise selbstständig, ohne Eingreifen der Regelungseinheit, zumindest in ihrer Umgebung den Zustand des vermaschten Funknetzes analysieren können. Diese Analyse kann ergeben, dass eine andere Sendecharakteristik vorteilhaft für das vermaschte Funknetz sein könnte, sodass die Funkknoten selbstständig ihre Sendecharakteristik ändern können. Beispielsweise können die Funkknoten durch die Analyse ermitteln, ob der Gesamtdatenstrom S₀ überwiegend in Richtung des Zielknotens oder in Richtung des Festnetzanbindungsknotens verläuft. Laden beispielsweise Nutzer auf ihren Endgeräten große Dateien herunter, wird der Gesamtdatenstrom S₀ in Richtung des Zielknoten zu laufen. In diesem Fall ist allerdings ein homogenes Abstrahlprofil, in welchem alle Raumrichtungen gleichermaßen mit elektromagnetischen Wellen bestrahlt werden, unter Umständen nicht effizient und ein räumliches Strahlprofil in der Form eines Kegel, der auf den Zielknoten gerichtet ist, kann den Gesamtdatenstrom S₀ deutlich energieeffizienter transportieren.

Erfindungsgemäß werden bei einem Systemausfall der Regelungseinheit alle n₀ Funkrouten des vermaschten Netzes aktiviert. Da ohne die Regelungseinheit eine dynamische Anpassung durch Deaktivierung bzw. Aktivierung der einzelnen Funkrouten nicht mehr möglich ist, wird hierdurch sichergestellt, dass der angeforderte Zielknotendatenstroms Z₀ dennoch übertragen werden kann, sodass die vollständige Funktionsfähigkeit des Systems auch bei einem Ausfall der Regelungseinheit gegeben ist. Hierzu ist es nötig, wie beansprucht, dass die Netzknoten regelmäßig über einen entsprechend eingerichteten Kanal mit der Regelungseinheit kommunizieren. Über diesen Kommunikationskanal kann der Zustand der Regelungseinheit an die einzelnen Netzknoten übertragen werden, wobei auf den Prozessoren in den Funkknoten ein Algorithmus implementiert ist, der diese automatisch aktiviert, wenn der Zustand der Regelungseinheit einen Fehler aufzeigt oder wenn die Kommunikation mit dieser ganz ausfällt.

Weitere vorteilhafte Ausgestaltungsmerkmale der vorliegenden Erfindung sind in den Patentansprüchen definiert.

Im Folgenden werden bevorzugte Ausführungsbeispiele der vorliegenden Erfindung unter Bezugnahme auf die begleitenden Figuren erläutert:
- Fig. 1: zeigt ein vermaschtes Funknetz.
- Fig. 2: zeigt eine dynamische Anpassung des vermaschten Funknetzes an einen angeforderten Datenstrom.
- Fig. 3: zeigt eine weitere dynamische Anpassung des vermaschten Funknetzes aus Fig. 2.
- Fig. 4: zeigt das Flussdiagramm für das erfindungsgemäße Verfahren zum Betreiben des vermaschten Funknetzes aus Fig. 2.

Nachfolgend werden zahlreiche Merkmale der vorliegenden Erfindung anhand von bevorzugten Ausführungsformen ausführlich erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist

In der Kommunikationstechnik bezeichnet man ein "Backhaul" (englisch Rücktransport) als die Anbindung eines vorgelagerten, meist hierarchisch untergeordneten Netzknotens an einen zentralen Netzknoten. Der Begriff beschreibt nur die Funktion der Anbindung und trifft keine Aussage über die zur Realisierung verwendete Technik.

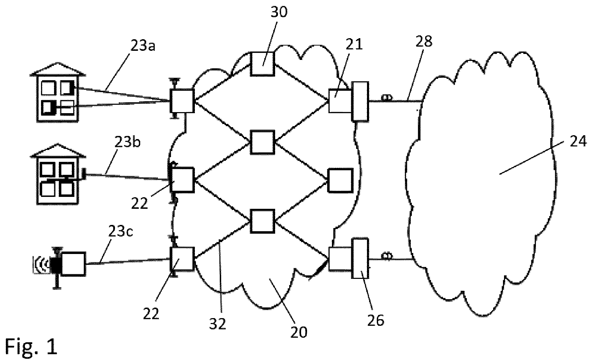

Eine technische Umsetzung dieses Backhauls, wodurch direkte Zugangslinks eines Datennetzwerks, insbesondere des Internets, bereitgestellt werden können stellt das in Fig. 1 gezeigte vermaschten Funknetz 20 dar. Das vermaschte Funknetz 20 stellt eine Verbindung zwischen zumindest einem Zielknoten 22 und dem Datennetzwerk 24 des Netzbetreibers her. Hierzu kann der Zielknoten 22 durch verschiedene Geräte technisch realisiert sein, sodass die
- Zugangslinks 23a direkt Endgeräte eines Nutzers in einer Wohnung erreichen (WTTH - Wireless to the home),
- Zugangslinks 23b als Funksignale ein jedes Gebäude erreichen und dort beispielsweise mittels eines Mesh-Access-Points in ein lokales Netzwerk eingespeist werden,
- Zugangslinks 23c an WiFi-Zugangspunkte bzw. Kleinfunkzellen des Mobilfunknetzes anschließen.

Die Funkzugangslinks 23 und das vermaschte Funknetz 20 stellen den klassischen Netzabschnitt "Zugangsnetz" dar. Die Anbindung des vermaschten Funknetzes 20 an das kabelgebundene Datennetzwerk 24, insbesondere das Internet 24, des Netzbetreibers erfolgt an einem Kabelverzweigerstandort 26, die typischerweise bereits durch Glasfaserkabel 28 erschlossen sind. Das vermaschte Funknetz 20 verfolgt den Zweck, die Verfügbarkeit des Zugangsnetzes auch unter widrigen Umständen sicherzustellen. Zu diesen widrigen Umständen können beispielsweise schlechte Wetterbedingungen, Bäume/Sträucher oder auch bewegliche Objekte, wie zum Beispiel Fahrzeuge gehören, die eine Funkverbindung bezüglich ihrer Sichtverbindung stören können.

Das erfindungsgemäße Ausführungsbeispiel des Verfahrens gib eine Möglichkeit an, das vermaschte Funknetz 20 mit einer Funktionalität auszustatten, die das dynamische Nachführen der Kapazität des vermaschten Funknetzes 20 entsprechend eines zeitlich variierenden Verkehrsbedarfs an Daten gestattet. Im Rahmen dieser Erfindung wird der zeitlich variierende Verkehrsbedarf als angeforderter Zielknotendatenstrom Z₀ bezeichnet. Die angegebene technische Lösung ermöglicht, dass in Zeiten niedriger Bedarfskapazitäten "umgerouted" wird und gegebenenfalls Funkrouten 32 deaktiviert werden, sodass die Energieeffizienz des Gesamtsystems verbessert werden kann. Durch ein gezieltes Herabsetzen der Datenrate auf bestimmten Funkrouten 32 wird weniger Leistung benötigt, wodurch wiederum im Betrieb Energie eingespart werden kann.

Hinter der Erfindung steckt also die Idee, die vermaschten Topologie des Funknetzes 20 zur dynamischen Kapazitätsanpassung zu nutzen und so dem zeitlich schwankenden Verkehrsbedarf an Daten zu entsprechen. Es erfolgt eine Koordinierung der vermaschten Knoten 22, 30, 21, insbesondere der Funkknoten 30, derart, dass die Kapazität flexibel geändert werden kann und in Schwachlastzeiten ganze Funkknoten 30, respektive die entsprechenden Funkrouten 32, abgeschaltet werden können. Um die Kapazität der einzelnen Funkrouten 32 anzupassen, werden verschiedene Möglichkeiten genutzt. Beispielsweise kann für die Funkrouten 32 das sogenannte Beamforming, einer Form des Raummulitplex, genutzt werden. Auf Verbindungsebene zwischen den Funkknoten 30 kann die Kapazität angepasst werden, indem die Modulationsstufigkeit (z.B. M-QAM, N-PSK) geändert wird oder die Sendeleistung reduziert oder erhöht wird. Diese Anpassungen können von den Funkknoten 30 selbstständig ausgeführt werden, wobei die Randbedingungen durch die beteiligten Access-Points auf Basis eines geeigneten Routingprotokolls oder eines Routingalgorithmus ausgeführt werden.

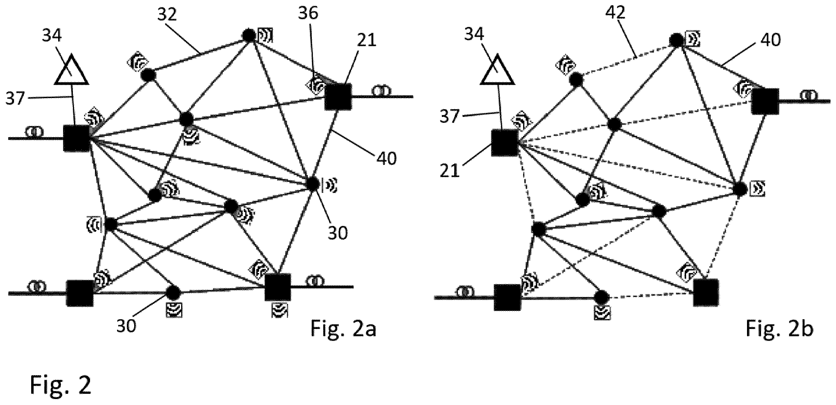

Soll das vermaschte Funknetz 20 "als Ganzes" bezüglich seiner Effizienz dynamisch angepasst werden, wird zumindest eine Regelungseinheit 34, siehe Fig. 2, benötigt, die mittels eines Verbindungskanals 37 in das vermaschte Funknetz 20 integriert ist und die das vermaschte Funknetz 20 und die entsprechenden Betriebszustände der Funkknoten 30 als "Ganzes" sieht. Auf einem Prozessor der Regelungseinheit 34 ist ein Optimierungsalgorithmus implementiert, der den Zustand des vermaschten Funknetzes 20 unter Einbeziehung des Kapazitätsbedarfs analysiert, auswertet und optimiert. Die Regelungseinheit 34 entscheidet, ob Funkrouten 32 deaktiviert/aktiviert werden bzw. deren Kapazität reduziert wird. Hierzu können Funkknoten 30 in einen Ruhemodus oder sogar in einem Standby-Zustand versetzt werden. Hierzu gibt es zwei Vorgehensweisen, die nachfolgend näher erläutert werden:
- der Datenstrom wird in einer Weise "umgerouted", also umgeleitet, dass einzelne Funkrouten 32 vom Datenstrom befreit werden und abgeschaltet werden können.
- Die Funkrouten 32 werden bezüglich ihrer Kapazität angepasst: Die Funkrouten 32 werden hierbei nicht abgeschaltet, sondern bedarfsgerecht in ihrer Bitrate den Anforderungen nachgeführt. Dies kann beispielsweise durch eine Sendeleistung Anpassung, QAM-/PSK- Stufenzahl Anpassung, Anpassung von Beamforming etc. realisiert werden.

Fig. 1, Fig. 2 und Fig. 3 zeigen das vermaschten Funknetz 20 mit:
- Festnetzanbindungsknoten 21, die Netzknoten des vermaschten Funknetzes 20 sind und die eine Glasfaseranbindung 28 in Richtung des Datennetzwerks 24, also des Kernnetzes, haben. Die Festnetzanbindungsknoten 21 weisen als Teil des vermaschten Funknetzes 20 ebenfalls Funkschnittstellen auf und können ebenso Zugangsfunktionalitäten für die Endkunden aufweisen. Der Festnetzanbindungsknoten 21 ist ein Gerät, welches die entsprechenden Netzwerkprotokolle kennt und ggf. ineinander umwandelt und einen jeweils eine Schnittstelle für eine Datenleitung und eine Sendeeinheit aufweist. Der Festnetzanbindungsknoten 21 verfügt über einen Prozessor, der diese Vorgänge steuert.
- Funkknoten 30: Diese können als
   ∘ Mesh-Points ausgebildet sein. Mesh-Points sind reine Relay-Knoten des Backhaul-Netzes, die ausschließlich dem Betrieb des vermaschten Funknetzes 20 dienen und das Funknetz räumlich aufspannen.
   ∘ Mesh-Access-Points ausgebildet sein. Sie stellen einerseits dem Kunden den direkten Zugangslink zur Verfügung und sind andererseits Teil des vermaschten Backhaul-Netzes.

Die Aussendung von Funksignalen 36 innerhalb des vermaschten Funknetzes 20 kann aus Redundanz- und/oder Resilienzgründen über unterschiedliche Funkrouten 32 erfolgen. So kann das Funksignal 36 beispielsweise von einem Festnetzanbindungsknoten 21 an drei verschiedene Funkknoten 30 (1/3; 1/3; 1/3) gesendet werden. Es wird ein Funk-Steuer-Kanal 37 etabliert (ähnlich dem D-Kanal im ISDN), der die Zustände der einzelnen Netzknoten regelmäßig abfragt und an die zentrale Regelungseinheit 34 sendet. Über die zentrale Regelungseinheit 34 können nun die einzelnen netzknoten, insbesondere die Funkknoten 30, gesteuert werden, sodass aufgrund eines aktuell angeforderten Zielknotendatenstroms Z₀ das Routing entlang der Funkrouten 32 beispielsweise von 1/3; 1/3; 1/3 auf 0/3; 1/3; 0/3 umgeschaltet wird. Dies bedeutet, dass im letzteren Fall zwei der zuvor aktiven Funkrouten 32, zumindest für eine gewisse Zeit, abgeschaltet werden. Zudem besteht die Möglichkeit, die Leistungsaufnahme der Funkknoten 30 aus Gründen der Energieeffizienz zu reduzieren, wenn aus anderen Richtungen noch Signale erwartet und verarbeitet werden oder diese ganz abzuschalten, wenn keine Funksignale mehr zu erwarten sind.

Die Regelungseinheit 34 erhält über den Steuerkanal 37, der sowohl In-Band als auch Out-of-Band ausgeführt sein kann, Eingangsdaten über den Betriebszustand des vermaschten Funknetzes 20 und die an den Funkknoten 30 vorherrschende bzw. erwartete Bedarfssituation und dein angeforderten Zielknotendatenstrom Z₀. Auf dieser Datengrundlage führt der intelligente Optimierungsalgorithmus dynamisch eine Netzoptimierung aus, wobei die notwendige Kapazitätsanpassung ermittelt wird, die die benötigten Verbindungs- und Knotenkapazitäten berücksichtigt. Auch die Zahl der aktiv verwendeten Festnetzanbindungsknoten 21 geht als Variable in diese Optimierung ein. In Zeiten eines niedrigen Zielknotendatenstrombedarfs, also zu Schwachlastzeiten, genügen gegebenenfalls zwei Funkknoten 30 für ein betrachtetes Gebiet, wobei in Zeiten starker Verkehrslast weitere Funkknoten 30 und Funkrouten 32 genutzt werden können, die seitens der Festnetzanbindungsknoten 21 vorbereitet und angeschlossen sein müssen. Dem Optimierungsalgorithmus liegen die mathematischen Randbedingungen zu Grunde, die Funksignale 36 optimal im vermaschten Funknetz 20 zu verteilen und die optimale Anzahl der Festnetzanbindungsknoten 21, der Funkknoten 30 und der benötigten Funkrouten 32 dynamisch zu finden und hierbei zugleich ein effizient arbeitendes, energiesparendes vermaschtes Funknetz 20 zu schaffen, das zugleich eine hohe Zuverlässigkeit aufweist.

Fig. 2a zeigt den Zustand des vermaschten Funknetzes 20 bei einem hohen Verkehrsbedarf, also zum Beispiel am Tag, und bei Anbindung an vier aktive Festnetzanbindungsknoten 21. Fig. 2b zeigt den Zustand des vermaschten Funknetzes 20 bei schwachem Verkehr, zum Beispiel in der Nacht. Es ist zu erkennen, dass in Fig. 2a alle Funkrouten 32 aktiv sind, wobei eine aktive Funkroute 32 mittels einer durchgezogenen Linie 40 dargestellt ist. In Fig. 2b ist zu sehen, dass einige der zuvor aktiven Funkrouten 40 nunmehr als deaktivierte Funkrouten 42 vorliegen, was durch eine gestrichelte Linie symbolisiert wird. Entlang welcher Funkknoten 30 die deaktivierten Funkrouten 42 verlaufen, wird durch die Regelungseinheit 34 festgelegt, wobei die Regelungseinheit 34 auch die entsprechenden Befehle aussendet, die das Verhalten der Funkknoten 30 auslösen. Es ist ersichtlich, dass das vermaschten Funknetz gemäß Fig. 2b weniger Energie verbraucht als in Fig. 2a.

Zudem besteht die Möglichkeit, dass in einem Festnetzanbindungsknoten 21 nur die Glasfaser-Einspeisung des Internets in Schwachlastzeiten abgeschaltet wird, der Festnetzanbindungsknoten 21 aber weiterhin als Relay-Knoten für das vermaschte Funknetz 20 fungiert.

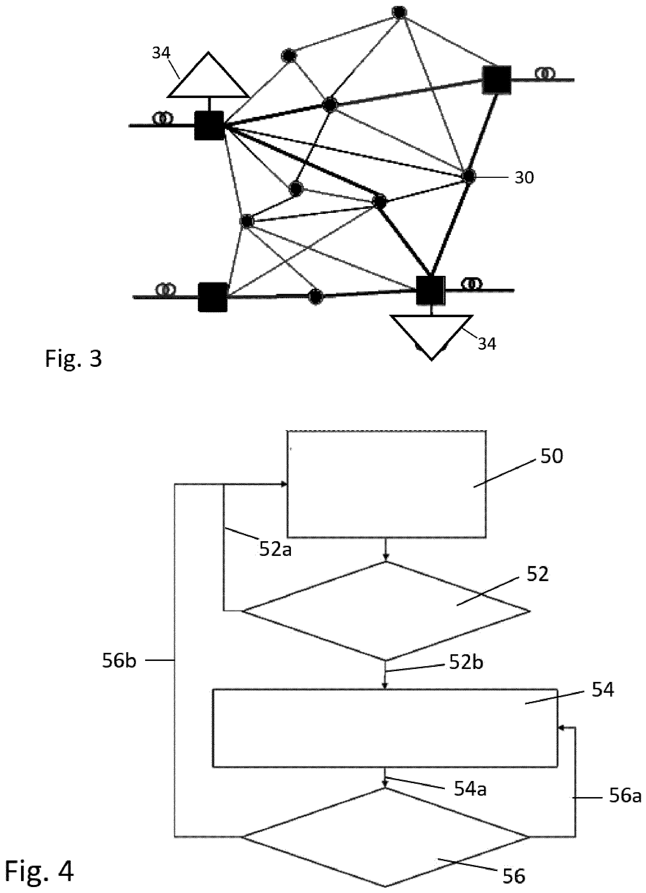

Fig. 3 zeigt das vermaschte Funknetz 20 nochmals mit zwei über Steuerkanäle angeschlossenen Regelungseinheit 34, die über die Netzzustandsinformationen verfügen und die entsprechenden Optimierungen ausführen. Sind mehrere Regelungseinheiten 34 über das vermaschte (Funk-)Netz verteilt sein, bringt dies jedoch die Herausforderung mit sich, dass gleiche "Netzsichtweisen" zwischen den Regelungseinheiten 34 hergestellt werden müssen. Insbesondere dürfen deren jeweilige Optimierungsalgorithmen nicht zu unterschiedlichen Ergebnissen führen. Die Regelungseinheit 34 sendet dann Signalisierungsinformationen zu den einzelnen Netzknoten, die Informationen über deren Kapazitätsschaltung enthalten. Auf dieser Basis wird das vermaschten Funknetz 20 in seiner Kapazität gesteuert. Die Regelungseinheit 34 verfügt über Management-Funktionalitäten (Network Management System), die sowohl In-band als auch Out-of-Band die Steuerung der verschiedenen Funkknoten 30 und Funkrouten 32 übernimmt.

Fig. 4 zeigt ein Flussdiagramm für das erfindungsgemäße Verfahren zum Betreiben des vermaschten Funknetzes aus Fig. 2. Der Startpunkt 50 des Verfahrens ist eine gegebene Verkehrssituation mit einem angeforderten Zielknotendatenstrom Z₀ zu einem an sich beliebigen Zeitpunkt innerhalb des vermaschten Funknetzes 20. Die Verkehrssituation umfasst
- Daten über Betriebszustände der Festnetzanbindungsknoten 21, die den Datenstrom über Funksignale in das vermaschten Funknetz einspeisen (Downlink) und früheren Verkehr ableiten (Uplink),
- Daten über Betriebszustände der Funkknoten 30, die den Datenstrom über n₁ Funkrouten 32 weiterleiten,
- die Anzahl n₁ an Funkrouten 32, die sich aus dem Optimierungsalgorithmus gemäß n₁ = f(Optimierung, Resilienz, Verkehr, Energieeffizienz) ergibt und über die Regelungseinheit 34 koordiniert wird.

In der Verzweigung 52 überprüft die Regelungseinheit 34 die aktuelle Verkehrssituation im vermaschten Funknetz 20 im Hinblick auf vorgegebene Schwellenwerte. Liegt keine Veränderung der Verkehrssituationen im Vergleich zur vorherigen Optimierung vor, nimmt die Regelungseinheit 34 keine Änderungen am vermaschten Funknetz 20 vor und der Pfad 52a wird beschritten.

Liegen hingegen Änderungen der Verkehrssituation vor, wird der Pfad 52b entlang des Flussdiagramms eingeschlagen, der zu dem Prozess 54 führt. Innerhalb des Prozesses 54 wird das vermaschte Funknetz 20 an die geänderte Verkehrssituation angepasst. Die Regelungseinheit 34 triggert den Optimierungsalgorithmus, wobei dieser die Anzahl n₁ der Funkrouten 32 gemäß n₁ = f(Optimierung, Resilienz, Verkehr, Energieeffizienz) optimiert. Als Folge sendet die Regelungseinheit 34 entsprechende Befehle, sodass Funkrouten 32, Festnetzanbindungsknoten 21, Funkknoten 30 ab- bzw. zugeschaltet werden. Bei Abschaltung eines der Festnetzanbindungsknotens 21 kann dieser weiterhin als Funkknoten 30 fungieren oder komplett abgeschaltet werden. Nach dem Prozess 54 wird der Pfad 54a beschritten, der in eine weitere Verzweigung 56 führt, die der Verzweigung 52 entspricht. Hat sich die Verkehrssituation im Vergleich zum Prozess 54 geändert, wird der Pfad 56a beschritten und das vermaschte Funknetz 20 erneut durch den Prozess 54 angepasst. Hat sich die Verkehrssituation im Vergleich zu Prozess 54 nicht geändert, so wird im Flussdiagramm der Pfad 56b durchlaufen, der wieder in den Startpunkt 50 mündet.

## Patentansprüche

1. Verfahren zum Betreiben eines vermaschten Funknetzes, umfassend
Netzknoten (21, 22, 30), die das vermaschte Funknetz (20) aufspannen und zumindest einen Festnetzanbindungsknoten (21) und mehrere Funkknoten (30) umfassen,
wobei der Festnetzanbindungsknoten (21) eine Schnittstelle zu einem kabelgebundenen Datennetzwerk (24), insbesondere dem Internet, herstellt und Funksignale (36) und kabelgebundenen Daten (28) ineinander umwandelt, empfängt und sendet,
wobei die Funkknoten (30) Funksignale (36) empfangen und weiterleiten,
wobei das vermaschte Funknetz (20) eine Anzahl n₀ an Funkrouten (32) zwischen jeweils zwei Netzknoten (21, 22, 30) ausbildet,
wobei Daten zwischen dem Datennetzwerk (24) und zumindest einem Zielknoten (22) vermittels des vermaschten Funknetzes (20) über eine Anzahl n₁ aktiver Funkrouten (32) übertragen werden und einen Gesamtdatenstrom S₀ erzeugen,
wobei der zumindest eine Zielknoten (22) einen Zielknotendatenstrom Z₀ anfordert,
wobei die Netzknoten (21, 22, 30) mit einer Regelungseinheit (34) datenleitend verbunden sind,
wobei die Regelungseinheit (34) regelmäßig Eingangsdaten betreffend Betriebszustände der Netzknoten (21, 22, 30) und des Zielknotendatenstroms Z₀ abfragt,
und dass die Regelungseinheit (34) auf Basis der Eingangsdaten selektiv zumindest einen der Betriebszustände der Netzknoten (21, 22, 30) und/oder der Funkrouten (32) ändert, indem das vermaschte Funknetz (20) dynamisch an den Bedarf des angeforderten Zielknotendatenstroms Z₀ angepasst wird,
wobei die Netzknoten (21, 22, 30) regelmäßig über einen entsprechend eingerichteten Kommunikationskanal mit einer Regelungseinheit (34) kommunizieren, wobei über den Kommunikationskanal ein Zustand der Regelungseinheit (34) an die einzelnen Netzknoten übertragen werden, wobei auf den Prozessoren in den Funkknoten ein Algorithmus implementiert ist, der diese automatisch aktiviert, wenn der Zustand der Regelungseinheit einen Fehler aufzeigt oder wenn die Kommunikation mit der Regelungseinheit ganz ausfällt.

2. Verfahren nach Anspruch 1, **dadurch gekennzeichnet, dass** als Zielknoten (22) ein Endgerät, ein Mesh-Access Point, ein Mobilfunkmast und/oder ein weiterer Festnetzanbindungsknoten (21) verwendet wird.

3. Verfahren nach einem der vorhergehenden Ansprüche, **dadurch gekennzeichnet, dass** ein Optimierungsalgorithmus der Regelungseinheit (34) eine optimierte Funkroute (32) oder mehrere optimierte Funkrouten (32) für die Funksignale (36) vom Festnetzanbindungsknoten (21) zu dem zumindest einen Zielknoten (22) ermittelt.

4. Verfahren nach Anspruch 3, **dadurch gekennzeichnet, dass** die Regelungseinheit (34) aktive Funkrouten (40) deaktiviert und deaktivierte Funkrouten (42) aktiviert, um die optimierte Route zu realisieren.

5. Verfahren nach Anspruch 4, **dadurch gekennzeichnet, dass** die Funkrouten deaktiviert bzw. aktiviert werden, indem die Regelungseinheit (34) den Betriebszustand der Netzknoten (21, 22, 30) ändert.

6. Verfahren nach einem der vorhergehenden Ansprüche, **dadurch gekennzeichnet, dass** die Anzahl n₁ der aktiven Funkrouten (40) erhöht oder erniedrigt wird.

7. Verfahren nach einem der vorhergehenden Ansprüche, **dadurch gekennzeichnet, dass** die Funkknoten (30) Sensoren und Algorithmen aufweisen, um die Funksignale (36) physikalisch zu analysieren.

8. Verfahren nach Anspruch 7, **dadurch gekennzeichnet, dass** die Funkknoten (30) eigenständig und/oder durch Befehle der Regelungseinheit (34) ihre Sendecharakteristik ändern, um den Gesamtdatenstrom S₀ zu ändern.

9. Vermaschtes Funknetzwerk geeignet zur Durchführung eines Verfahrens nach einem der Ansprüche 1 bis 8.

## Claims

1. Method for operating a wireless mesh network, comprising
network nodes (21, 22, 30) spanning the wireless mesh network (20) and comprising at least one fixed network connection node (21) and a plurality of wireless nodes (30),
wherein the fixed network connection node (21) establishes an interface to a wired data network (24), in particular the internet, and converts into one another, receives, and transmits radio signals (36) and wired data (28),
wherein the wireless nodes (30) receive and forward radio signals (36),
wherein the wireless mesh network (20) forms a number n₀ of wireless routes (32) between two network nodes (21, 22, 30) in each case,
wherein data is transmitted between the data network (24) and at least one target node (22) by means of the wireless mesh network (20) via a number n₁ of active wireless routes (32) and generates a combined data stream S₀,
wherein the at least one target node (22) requests a target node data stream Z₀,
wherein the network nodes (21, 22, 30) are connected to a control entity (34) for data transfer,
wherein the control entity (34) regularly requests input data relating to operating states of the network nodes (21, 22, 30) and of the target node data stream Z₀,
and that the control entity (34) selectively changes at least one of the operating states of the network nodes (21, 22, 30) and/or the wireless routes (32) on the basis of the input data by dynamically adapting the wireless mesh network (20) to the demand of the requested target node data stream Z₀,
wherein the network nodes (21, 22, 30) regularly communicate via an appropriately configured communication channel, wherein a state of the control entity (34) is transmitted to the individual network nodes via the communication channel, wherein an algorithm is implemented on the processors in the wireless nodes, which activates them automatically if the state of the control entity (34) indicates an error or if communication with the control entity is completely lost.

2. Method according to Claim 1, **characterized in that** a terminal device, a mesh access point, a mobile communication mast and/or another fixed network connection node (21) is used as the target node (22).

3. Method according to any one of the preceding claims, **characterized in that** an optimization algorithm of the control entity (34) determines an optimized wireless route (32) or a plurality of optimized wireless routes (32) for the wireless signals (36) from the fixed network connection node (21) to the at least one target node (22).

4. Method according to Claim 3, **characterized in that** the control entity (34) deactivates active wireless routes (40) and activates deactivated wireless routes (42) in order to realize the optimized route.

5. Method according to Claim 4, **characterized in that** the wireless routes are deactivated or activated by virtue of the control entity (34) changing the operating state of the network nodes (21, 22, 30).

6. Method according to any one of the preceding claims, **characterized in that** the number n₁ of active wireless routes (40) is increased or decreased.

7. Method according to any one of the preceding claims, **characterized in that** the wireless nodes (30) comprise sensors and algorithms to physically analyse the wireless signals (36).

8. Method according to Claim 7, **characterized in that** the wireless nodes (30) change their transmission characteristics independently and/or by means of commands from the control entity (34) in order to change the combined data stream S₀.

9. Wireless mesh network suitable for carrying a method according to any of Claims 1 to 8.

## Revendications

1. Procédé d'exploitation d'un réseau de radiocommunication maillé, comprenant
des noeuds de réseau (21, 22, 30), qui englobent le réseau de radiocommunication maillé (20) et comprennent au moins un noeud de connexion fixe (21) et plusieurs noeuds radio (30),
dans lequel le noeud de connexion fixe (21) établit une interface vers un réseau de données filaire (24), en particulier l'Internet, et interconvertit, reçoit et envoie des signaux radio (36) et données filaires (28),
dans lequel les noeuds radio (30) reçoivent et transmettent des signaux radio (36),
dans lequel le réseau de radiocommunication maillé (20) forme un certain nombre de trajets radio (32) entre deux noeuds de réseau (21, 22, 30),
dans lequel les données entre le réseau de données (24) et au moins un noeud de destination (22) sont transmises au moyen du réseau de radiocommunication maillé (20) via un nombre n₁ de trajets radio actifs (32) et génèrent un flux de données global S₀,
dans lequel le au moins un noeud de destination (22) requiert un flux de données de noeud de destination Z₀,
dans lequel les noeuds de réseau (21, 22, 30) sont reliés à une unité de commande (34) d'une manière conductrice de données,
dans lequel l'unité de commande (34) interroge régulièrement des données d'entrée relatives aux états de fonctionnement des noeuds de réseau (21, 22, 30) et du flux de données de noeud de destination Z₀,
et en ce que l'unité de commande (34) modifie sélectivement au moins un des états de fonctionnement des noeuds de réseau (21, 22, 30) et/ou des trajets radio (32) sur la base des données d'entrée en utilisant le réseau de radiocommunication maillé (20) en adaptant dynamiquement aux besoins du flux de données du noeud de destination demandé Z₀,
dans lequel les noeuds de réseau (21, 22, 30) communiquent régulièrement via un canal de communication configuré en conséquence avec une unité de commande (34), dans lequel via le canal de communication un état de l'unité de commande (34) est transmis aux noeuds de réseau individuels, dans lequel un algorithme est mis en œuvre sur les processeurs dans les noeuds radio, qui les active automatiquement, lorsque l'état de l'unité de commande indique une erreur ou lorsque la communication se remplit complètement avec l'unité de commande.

2. Procédé selon la revendication 1, **caractérisé en ce qu'**un terminal, un point d'accès maillé, un mât radio mobile et/ou un autre noeud de connexion au réseau fixe (21) est utilisé comme noeud de destination (22).

3. Procédé selon une quelconque des revendications précédentes, **caractérisé en ce qu'**un algorithme d'optimisation de l'unité de commande (34) détermine un trajet radio optimisé (32) ou plusieurs trajets radio optimisés (32) pour les signaux radio (36) provenant des noeuds de connexion de réseau fixe (21) vers au moins un noeud de destination (22).

4. Procédé selon la revendication 3, **caractérisé en ce que** l'unité de commande (34) désactive les trajets radio actifs (40) et active les trajets radio désactivés (42) pour mettre en œuvre le trajet optimisé.

5. Procédé selon la revendication 4, **caractérisé en ce que** les trajets radio peuvent être désactivés ou activés, en modifiant par l'unité de commande (34) l'état de fonctionnement des noeuds de réseau (21, 22, 30) .

6. Procédé selon une des revendications précédentes, **caractérisé en ce que** le nombre n₁ de trajets radio actifs (40) est augmenté ou diminué.

7. Procédé selon une quelconque des revendications précédentes, caractérisé en ce les noeuds radio (30) présentent des capteurs et des algorithmes, pour doivent analyser physiquement les signaux radio (36).

8. Procédé selon la revendication 7, **caractérisé en ce que** les noeuds radio (30) indépendamment et/ou par des instructions de l"unité de commande (34) modifient leurs caractéristiques de transmission afin de modifier le flux de données global S₀.

9. Réseau de radiocommunication maillé adapté à la mise en œuvre d'un procédé selon une des revendications 1 à 8.
